# EUROPEAN PATENT SPECIFICATION

(11) **EP 1 383 298 B1**
(45) Date of publication and mention of the grant of the patent: **05.04.2006**
(21) Application number: 02015948.9
(22) Date of filing: 17.07.2002
(51) Int. Cl.: H04M 1/60, H04M 1/03

(54) **Acoustic shock protection for a mobile telecommunication terminal**
mobiles teöekommunikationsendgerät mit akustischem schockschutz
terminal de telecommunication mobile avec protection contre des chocs acoustiques

(43) Date of publication of application: 21.01.2004
(73) Proprietor: Sony Ericsson Mobile Communications AB, 221 88 Lund (SE)
(72) Inventor: Lechner, Thomas, German Branch, Sony Ericsson, 85609 Aschheim-Dornach (DE)
(74) Representative: Körber, Martin Hans

(56) References cited:
- EP-A- 1 168 778
- US-A- 5 675 658
- US-A- 6 148 080
- US-B1- 6 324 284

## Description

The present invention relates to a mobile telecommunication terminal equipped for both, hands-free and handset mode. In particular, the present invention relates to a reduction of a sound pressure emitted from an earpiece of a mobile telecommunication terminal to a safe value.

Mobile telecommunication terminals which are equipped for both, hands-free and handset mode like e.g. a mobile telephone, a personal digital assistant or the like, are generally provided with two transducers, one for the earpiece and a separate one for the hands-free mode. Both transducer transform an audio frequency signal supplied from a voice band electronic circuit of the telecommunication device into a sound signal. The transducers can be based on various conversion principles like for instance that of an electrodynamic or that of an piezoelectric speaker. In the further course of this description, the term speaker will be used as a synonym for the more general term transducer if not specified otherwise.

The speaker used for the earpiece is commonly mounted in a cavity placed within the case of mobile terminal. The cavity is acoustically connected to the earpiece by one or more openings. The design of the earpiece adopts most commonly a so called 'leak tolerant' method for achieving a low acoustic impedance. Thus, a negative effect of an acoustic leak between an users auricle and the earpiece on the sound quality is largely avoided. One common method to achieve leak tolerance is by adding so called leak holes or load holes from the outer surface of the earpiece back to the cavity inside the case of the mobile terminal.

The speaker used for the hands-free mode is usually operated at higher power levels than the earpiece speaker due to the required radiated sound power. It is also mounted inside the case of the mobile telecommunication terminal, e.g. on the back of the casing. The cavity accommodating it provides a more or less closed back volume for an effective acoustic radiation of low frequencies.

Preferably, acoustic designs are used with mobile telecommunication terminals which are based on a shared use of just one big cavity inside the casing as a back cavity for both transducers. The sound pressure generated by the speaker for the hands-free mode on the back side of it's membrane can thereby propagate through the openings of the cavity to the earpiece or directly through the earpiece speaker by moving its membrane.

When listening to voice or audio data on a mobile telecommunication terminal in handset mode, a user usually keeps his auricle in close contact to the earpiece of the device. Sometimes it is even almost sealed to it. The mobile terminal may accidentally still be in hands-free mode or start an alarm signal e.g. in order to indicate an incoming call or a finer alarm and thus expose a users hearing to the high sound pressure produced by the hands-free speaker. Due to the short distance to a users ear and the high sound pressure immanent to the hands-free operation mode of the mobile telecommunication device, the sound pressure on the user's ear could be uncomfortably painful or even cause hearing damage.

The hearing reacts to such high sound pressure with temporary threshold shift, high pitched noise (tinnitus) or instant damage. Even a temporary threshold shift can cause permanent damage if it occurs frequently. The associated damage to the hearing is so far irreparable.

US 6,324,284 B1 discloses a mobile telephone for wireless communication comprising a microphone to receive speech from the user and a receiver to emit sound to the ear of a user. Further, the mobile terminal comprises a loud speaker for outputting acoustics signals in a loudspeaking or hands-free mode. The receiver is a sealed unit to prevent sound from the loudspeaker from getting through the receiver and then the receiver ports directly to the user's ear in order to avoid that very loud levels from the loudspeaker damage the hearing of the user.

The object of the present invention is to provide a mobile telecommunication terminal comprising a first transducer for generating an acoustic signal supplied to the earpiece of the mobile telecommunication terminal based on a first electric signal and a second transducer for generating a high sound pressure acoustic signal based on a second electric signal, which enables the protection of a user's hearing caused by the second transducer where the mobile terminal is held close to the user's ear in a simple way without increasing the weight and the complexity of the mobile terminal.

The above object is achieved by the invention as defined in the independent claim. Further developments are set forth in the dependent claims.

The object of the present invention is achieved in particular by a mobile telecommunication terminal having a first transducer for generating an acoustic signal supplied to the earpiece of the mobile telecommunication terminal based on a first electric signal, and a second transducer for generating a high sound pressure acoustic signal based on a second electric signal, whereby a cancellation component of the first electric signal provided at the first transducer has a waveform which is suited to at least partially cancel the part of the high sound pressure acoustic signal produced by the second transducer which leaks into the earpiece of the mobile telecommunication terminal.

A mobile telecommunication terminal in accordance with the present invention protects a user from hearing damage caused by acoustic shock when accidentally using the device being in hands-free or ringer mode in handset position close to his/her ear.

The generation of the cancelling component of the first electric signal and the generation of the second electric signal are suitably based on a common electric signal for simplifying the voice band control circuitry.

The spectrum of the high sound pressure audio signal at the earpiece is generally affected by the audio properties of the cavities and openings through which it propagates. A filter for influencing the spectrum of the cancellation component of the first electric signal is therefore used advantageously to appropriately adapt the spectrum of the cancellation component.

As the sound signals produced by the first and by the second transducer are likely to be out of phase at the point of being emitted from the earpiece of the mobile telecommunication terminal, a phase shifter favourably shifts the phase of the cancellation component of the first electric signal relative to the phase of the second electric signal.

To achieve a good synchronisation of the cancellation component with the high pressure audio signal from the second transducer, the first transducer is preferably connected to the second transducer by means of passive components allowing crosstalk from the second to the first transducer. The passive component is suitably formed by a resistor and/or a capacitor and/or an inductance.

A crosstalk of the electric signal for the second transducer to the first transducer may further be implemented controllably by connecting one contact of the first transducer to ground potential via a resistor or a network consisting of resistor(s), capacitor(s) and/or inductor(s) being shunt by a switch in such a way that the switch is in a closed state if no electric signal is supplied to the second transducer and is in an open state otherwise.

Advantageously, the second transducer is driven by a separate power amplifier stage. Hereby, the connection from the signal path of the first transducer to the second transducer is advantageously branched at the input of the separate power amplifier stage. Alternatively, the connection from the signal path of the first transducer to the second transducer is advantageously branched at the output of the separate power amplifier stage. Further advantageously, the first and second transducer are driven by separate outputs of the voice band electronic circuit. Hereby, at least one of the function units filter and phase shifter advantageously is a digital filter. Alternatively, at least one of the function units filter and phase shifter advantageously processes time discrete analog signals.

For an economical implementation of the present invention, the use of electrodynamic type transducers is preferred.

In the following description, the present invention is explained in more detail with respect to special embodiments and in relation to the enclosed drawings, in which
- Figure 1: shows a typical mobile telecommunication terminal for application of the present invention,
- Figure 2a: shows an acoustic equivalent circuit of an earpiece arrangement underlying the present invention,
- Figure 2b: shows the equivalent electric circuit according to the pV-analogy,
- Figure 3a: shows in a block diagram the principles of a first kind of an acoustic shock protection according to the present invention,
- Figure 3b: shows in a block diagram the principles of a second kind of an acoustic shock protection according to the present invention,
- Figure 4a: shows a circuit scheme of a first embodiment of the present invention,
- Figure 4b: shows a circuit scheme of a modified version of the embodiment of Fig. 4a,
- Figure 5: shows a circuit scheme of a second embodiment of the present invention,
- Figure 6a: shows a circuit scheme of a third embodiment of the present invention,
- Figure 6b: shows a circuit scheme of a modified version of the embodiment of Fig. 6a,
- Figure 7a: shows a circuit scheme of a fourth embodiment of the present invention,
- Figure 7b: shows a circuit scheme of a modified version of the embodiment of Fig. 7a,
- Figure 7c: shows a circuit scheme of a further modified version of the embodiment of Fig. 7a.
- Figure 8a: shows a circuit scheme of a fifth embodiment of the present invention,
- Figure 8b: shows a circuit scheme of a modified version of the embodiment of Fig. 8a,

In the drawings, functionally equivalent elements are assigned equal reference numerals.

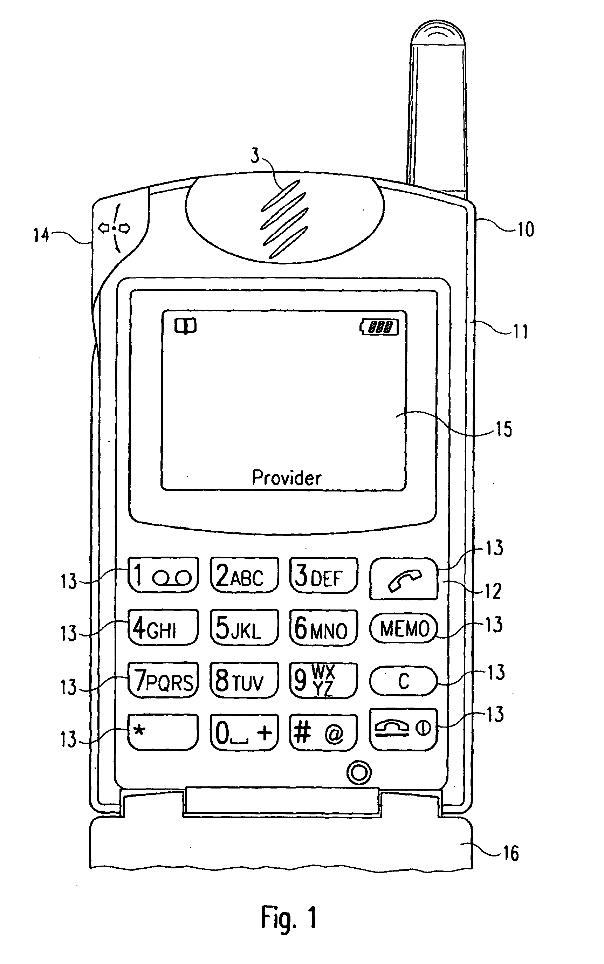

A typical mobile telecommunication terminal 10 according to the present invention is shown in Fig. 1. The terminal 10 comprises a casing 11 which might be equipped with a flap 16. Control is achieved by use of a keyboard 12, having keys 13 and optionally by a navigational control key 14 like e.g. a jog dial or the like. The navigational control key enables a user to browse through data presented on the display 15 of the mobile terminal 10. An earpiece 3 is provided on the mobile terminal 10 for allowing to listen to voice and audio data received with the device.

The mobile terminal 10 is equipped with two speakers 1 and 2, which are mounted inside the casing 11. The earpiece speaker 1 is generally mounted below the cap of the earpiece 3. The earpiece speaker 1 forms in conjunction with the casing shell 11 and the earpiece cap one or more cavities and/or enclosures which design define the acoustic properties of the such formed earpiece speaker. The acoustic filter properties of the earpiece are further formed by the openings from inner cavities to the earpiece cap and by leak openings between the inner cavities and the surrounding of the earpiece cap.

The second speaker 2 used for hands-free operation of the mobile telecommunication device 10 is also mounted inside the shell 11. The cavities for this hands-free speaker 2 are designed to provide a more or less closed back volume to avoid acoustic short circuit, especially for low frequencies. Many designs use one back cavity shared by both speakers, but even if not, the acoustic properties of the components used in a mobile terminal 10 bring about an acoustic coupling between the earpiece 3 and the hands-free speaker 2 when the latter generates a high sound pressure acoustic signal.

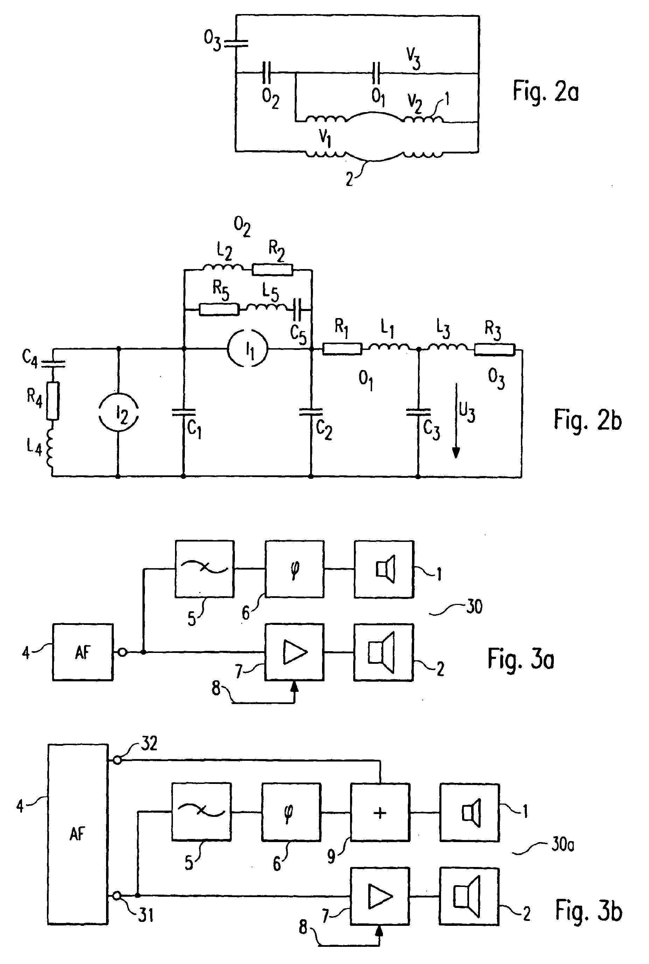

The acoustic coupling between the two speakers 1 and 2 can be described by means of an acoustic equivalent circuit as shown in Fig. 2a. For a better understanding, Fig. 2b shows the electric equivalent circuit according to the p-V analogy, where sound pressure is represented by voltage, volume velocity by current, compliance by capacity, mass by inductance and friction by resistance. The earpiece transducer 1 operates as an acoustic source which generates sound pressure in the earpiece cavity V₂. The acoustic wave propagates through the cavity V₂ and the opening O₁ with a mass and a friction represented by R₁ and L₁ to the space V₃ between earpiece and the ear of the user. Usually there is also a leak O₃ between the earpiece and the ear, which represents an additional acoustic load. The sound is influenced in amplitude and phase by the compliances of the cavities V₂ and V₃, represented by C₂ and C₃, and by mass and friction of the openings O₁, O₂, and O₃, represented by L₁, L₂, L₃, R₁, R₂, and R₃. The sound pressure at the entrance of the user's ear corresponds to the voltage U₃ across C₃. There might also exist more cavities connected to the described cavities by more openings, which change the acoustic behaviour quantitatively, but not in principle.

What has been described for the acoustic circuit of the earpiece above applies likewise for the acoustic circuit of the hands-free transducer. The sound pressure generated by the back side of the membrane of the speaker 2 inside one or more cavities V₁ inside the mobile terminal 10 is changed in amplitude and phase by the masses, frictions, and compliances along the propagation paths through the device, before it reaches the cavity V₃ between the earpiece and the user's ear. As can be seen, the cavity V₃ between the earpiece and the user's ear is acoustically linked to the cavity V₁ provided for the hands-free speaker 2 described above. A considerable portion of the acoustic energy generated by the hands-free transducer 2 will therefore propagate to the cavity V₃ between the earpiece and the user's ear, exposing the user's ear to a high sound pressure, which might be uncomfortable or even hazardous.

Another opening O₂ leads from V₃ to the inner cavity V₁ of the mobile, which is usually larger than V₂ and V₃. This opening O₂ reduces the influence of O₃ on the generated sound pressure, which is referred to as leak tolerant design. The acoustic load formed by the user's ear is not shown here. Its influence in a leak tolerant design can be neglected for the purpose of this explanation.

To exclude any potential health hazard, the present invention uses the earpiece speaker for generating a sound pressure that is suited to cancel at least potentially the hazarding sound signal formed by the portion of the sound wave generated by the hands-free transducer which propagates through the earpiece.

The schematic circuit diagrams of Fig. 3a and Fig. 3b illustrate the principles used to achieve an according hearing protection on a respective mobile telecommunication terminal. The first principle 30 is based on the assumption, that the mobile terminal will either be operated in handset or in hands-free mode. That means, that if the hands-free speaker 2 is active, no sound pressure is supposed to be emitted from the earpiece of the mobile device 10. An electric audio frequency (AF) signal supplied from a port 31 of the voice band electronic circuit 4 can therefore be provided to the driving circuits of both transducers simultaneously.

The AF-signal is amplified by a power amplifier 7 before being converted by the handset transducer 2. A control port 8 at the power amplifier 7 enables a control of the amplifiers gain through the control circuitry of the mobile device 10, particularly turning off or turning on of the hands-free mode.

The earpiece speaker 1 converts the AF-signal from the voice band electronic circuit without prior amplification. Additional frequency filters 5 and/or phase shifters 6 may be used in the driving circuit for the earpiece speaker 1 to compensate for the changes which the hazarding sound signal has undergone on its propagation path. Frequency distribution and phase of the sound signal produced by the transducer 1 are adjusted to generate a sound pressure wave of at least approximately the same waveform as the hazarding sound signal but with an inverted phase. The decision if a respective frequency filter 5 and/or a respective phase shifter have to be implemented in form of an electric or electronic circuit in one or both of the driving circuits for the speakers depends on the acoustic design of the propagation paths for both speakers. A phase inversion can e.g. be realised acoustically by emitting one sound wave from the backside of one speaker, while the other sound wave is emitted from the front side of the respective other one, or by interchanging the two connection leads of one of the two speakers.

The second principle 30a of the present invention is illustrated in Fig. 4a. Like for the example 30 of Fig. 3a, the driving circuits of the earpiece as well as for the hands-free speaker are supplied from the same port 31 of the voice band electronic circuit 4. But additionally, the earpiece speaker gets a second AF-signal from a second port 32 of the voice band electronic circuit 4 which is superimposed to the first signal originating from port 31 by an adding means 9 located in the driving circuit of the earpiece transducer. This layout allows to produce a cancellation component to annihilate the hazardous interfering signal from the hands-free speaker independent of a generation of a wanted signal destined for the earpiece only. The mobile terminal 10 can thus simultaneously be in hands-free operation while still being safe to be used hands-on, e.g. when a user wants other people around him to follow the conversation but prefers to keep the mobile close to his hear to obtain a better acoustic quality for himself. Also, when the hands-free speaker 2 is used to produce ringing tones for signalling for instance a second incoming call or an alarm, the second principle is the preferred solution. As the two modes of operation, i.e. the hands-free and the handset mode are used independent of each other for this solution, the control of the operation mode is not performed by means of the control port 8 but within the voice band electronic circuit 4 activating or deactivating the respective AF-port 31 or 32.

Alternatively to the first and second principle introduced above, the audio signal for the earpiece speaker 1 could also be derived digitally from the signal for the hands-free speaker 2, and both signals could be output by separate outputs of the voice band circuitry 4.

A first embodiment 40 of the present invention shown in Fig. 4a represents an implementation of the first principle 30. The AF-signal supplied by just one output port 31 of a voice band electronic circuit 4 or audio band electronic circuit 4, respectively, is provided to both, the earpiece transducer 1 and the power amplifier 7 for the hands-free transducer 2 simultaneously. The power amplifier may be designed to compensate for any changes of the frequency distribution the hazardous sound signal undergoes on its propagation path to the earpiece, but alternatively, an electronic filter placed between port 31 and the earpiece speaker may be used instead. If the acoustic design of the propagation paths does not yield the necessary relationship between phases of the hazardous sound wave and the sound wave generated by the earpiece speaker 1, a phase shifter has to placed in series with the mentioned frequency filter. A phase shift of π can e.g. easily be achieved by changing the polarity of the earpiece or hands-free speaker.

The power amplifier 7 is controlled by means of the control port 8 connected to a logical driving circuit of the mobile telecommunication terminal 10. In the handset operation mode, the power amplifier 7 is turned off. Acoustic signals will then only be generated by the earpiece speaker 1. In hands-free operation mode or for using the hands-free transducer to produce a ringing tone or the like, the power amplifier 7 is turned on with a gain adjusted to ensure at least a partial cancellation of the sound waves in the earpiece 3 of the mobile telecommunication terminal 10.

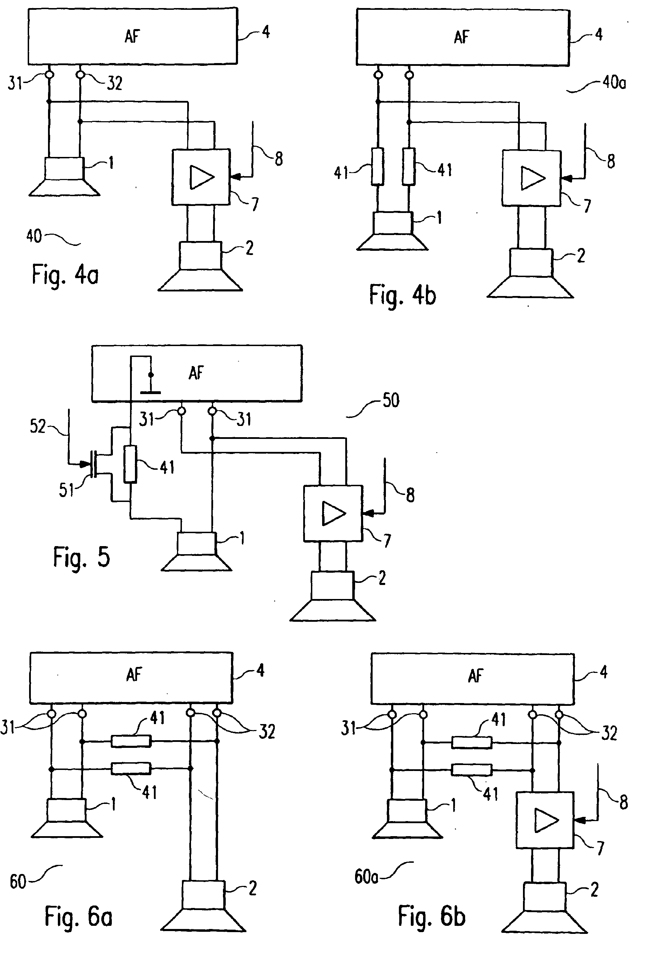

As it is not always desirable to limit the sound volume for the hands-free operation mode, the earpiece speaker may be connected to the output port 31 of the voice band electronic circuit via one or more resistors as shown e.g. in Fig. 4b. The resistors of this implementation 40a of the first principle 30 form a load in the driving circuit of the earpiece transducer 1 reducing the sound pressure generated by speaker 1. To allow a user adjustable sound volume for the handset operation mode, the resistors may be carried out as variable resistors, e.g. implemented by transistors operated in the proportional region.

A second embodiment 50 is shown in Fig. 5, which again represents an implementation of the first principle 30 shown in Fig. 3a. Distinct from the first embodiment, one port of the earpiece speaker is connected to ground potential via a resistor 41. The function of this resistor 41 corresponds to that of the second implementation 40a of the first embodiment. Likewise, it may be a resistor with a fixed value or a variable resistor formed by an electronic device like described above. The resistor 41 is shunt by a controllable switch 51, which is in closed state at a hands-on operation, and in an open state at a hands-free operation of the mobile telecommunication terminal 10. Favourably a bipolar or field effect transistor like shown in Fig. 5 is used as a switch. The base or gate contact of the respective transistor or the control port 52 of a respective switch are advantageously controlled by the same circuitry as the control port 8 of the power amplifier 7.

A third embodiment 60 of the present invention is shown in Fig. 6a. It represents an implementation of the second principle 30a. According to this embodiment, the earpiece and the hands-free speaker are driven by separate outputs of a voice band electronic circuit 4. A control circuit of the mobile terminal 10 activates the respective output port 31 or 32, respectively, according to a user selection or system setting. When switched off, the outputs of the audio band electronic circuit 4 at the ports 31 and 32 have a high impedance, so that none of the outputs form a load for the feeding circuitry of the respective other output. This way the cancelling signal can be fed from the output 32 of the voiceband circuitry belonging to the hands-free speaker. As the hands-free speaker usually has a significantly lower impedance than the earpiece speaker, the attenuation from output 31 via the resistors 41 to the hands-free speaker is much higher preventing sound to be radiated from the hands free speaker in handset mode.

In order to generate a cancellation component of the sound signal produced with the earpiece speaker 1, one or both terminals of the earpiece speaker are connected to the feeding lines of the hands-free speaker 2 by resistors 41, which can be of constant or adjustable value. The hands-free speaker 2 may be fed directly from the output port 32 of the audio band electronic circuit 4 as shown in Fig. 6a or alternatively hereto via a power amplifier 7 placed between the output port 32 and the connection points of the resistors 41 on the feeding lines for the transducer 2 as shown in the implementation 60a represented in Fig. 6b. Alternatively, the resistors 41 may also be replaced by a network consisting of resistors, capacitors and/or inductors.

The phase and frequency distribution of the cancellation component is adjusted for a proper cancellation of the hazardous sound wave either by acoustic design or by additional circuitry not shown in Figures 6a and 6b. The value of the resistors is made to regulate the volume of the cancellation component for an optimised reduction of the hazardous sound signal originating from the hands-free transducer 2.

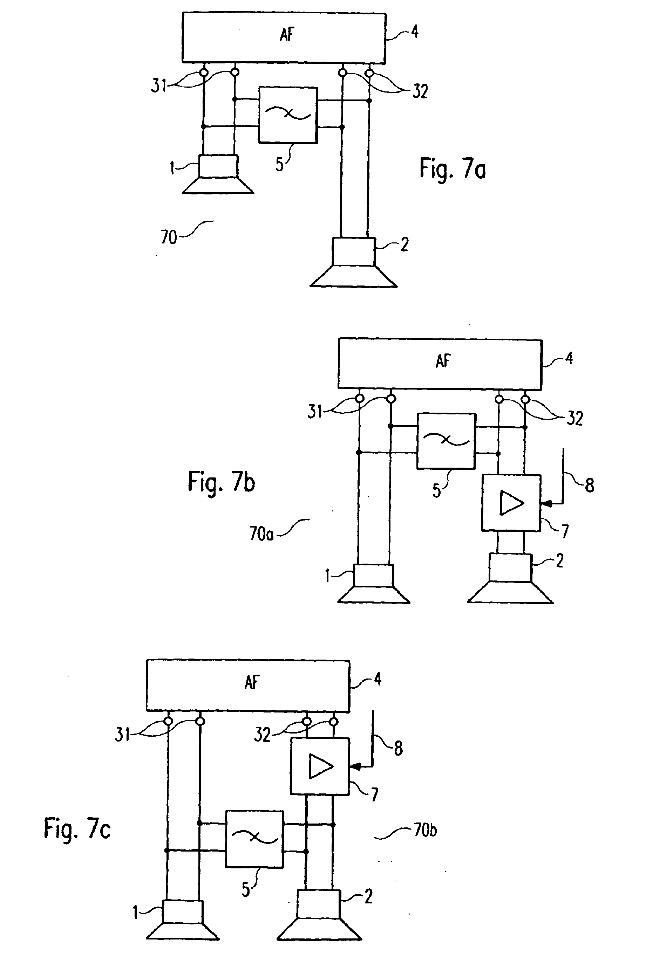

Figures 7a, 7b and 7c show implementations of a fourth embodiment of the present invention. A passive filter 5 is used to branch off a portion of the AF-signal provided at port 32 of the voice band electronic circuit 4 to the earpiece speaker 1 for generating a cancellation component. The filter is designed to modify at least the frequency distribution of AF-signal as originating from port 32 of the voice band circuit for an optimum cancellation of the hazardous sound wave with the such produced cancellation component. The passive filter may further be laid out for modifying also the phase and average amplitude of the AF-signal to optimise the cancellation result.

Like for the two variations of the third embodiment of the present invention, the hands-free speaker 2 may be fed directly from the output port 32 of the audio band electronic circuit 4 as shown in Fig. 7a or alternatively hereto via a power amplifier 7 placed between the output port 32 and the connection points of the passive filter 5 on the feeding lines for the transducer 2 as shown in the implementation 70a represented in Fig. 7b. In this case the filter 5 might also be connected to the output of the power amplifier 7, as shown in Fig. 7c. The filter is preferably built from passive components, like e.g. resistors, capacitors and/or inductive devices, or the like.

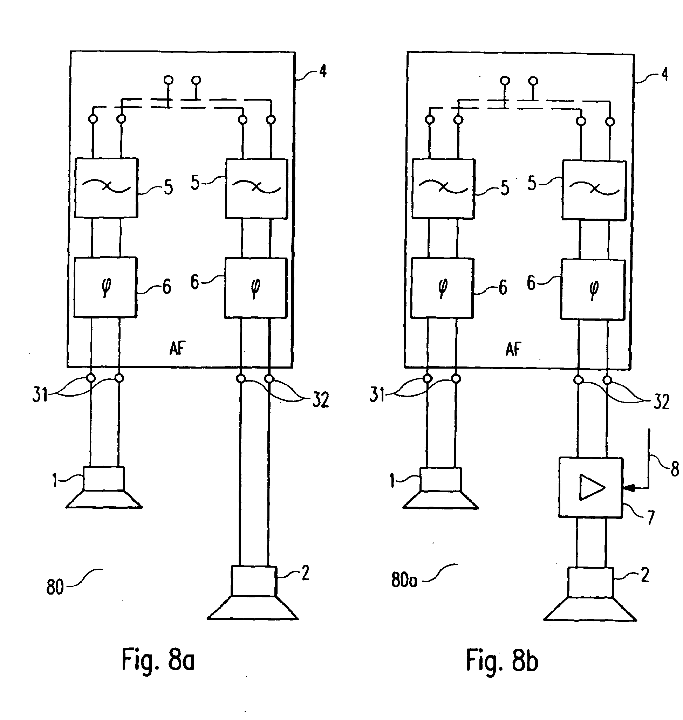

Two variations of a fifth embodiment of the present invention are shown in Figures 8a and 8b, respectively. Implementing the second principle 30a, each speaker is connected to a separate output port of the voice band electronic circuit. These outputs 31 and 32 can be operated alternatively and simultaneously. The hands-free speaker 2 can either be driven directly from port 32 of the voice band electronic circuit as shown in Fig. 8a or via a power amplifier placed between the speaker 2 and the output port 32 which is illustrated in Fig. 8b.

Gain and the frequency response of amplitude and phase of each AF-signal path of the output ports are adjusted individually by a separate filter 5 and phase shifter 6 placed in the audio path to the output ports 31 and 32 of the voice band electronic circuit 4. The filtering and phase shifting may thereby be done in the digital, analog time discrete or fully analog domain. The phases, gains and filter characteristics of both output lines are hereby adjusted such that the cancellation component of the sound pressure wave generated on the earpiece transducer 1 is suited to cancel the hazardous sound signal originating from the hands-free transducer 2 at least partially.

## Claims

1. A mobile telecommunication terminal (10) comprising
a first transducer (1) for generating an acoustic signal supplied to the earpiece (3) of the mobile telecommunication terminal (10) based on a first electric signal, and a second transducer for generating a high sound pressure acoustic signal based on a second electric signal,
**characterised in ,**
**that** a cancellation component of the first electric signal provided at the first transducer (1) has a waveform which is suited to at least partially cancel out the part of the high sound pressure acoustic signal produced by the second transducer (2) leaking into the earpiece (3) of the mobile telecommunication terminal (10).

2. A mobile telecommunication terminal according to claim 1,
**characterised in,**
**that** the generation of the cancellation component of the first electric signal and the generation of the second electric signal are based on a common electric signal.

3. A mobile telecommunication terminal according to claim 1 or 2,
**characterised by**
a filter (5) for influencing the spectrum of the cancellation component of the first electric signal.

4. A mobile telecommunication terminal according to claim 1, 2 or 3,
**characterised by**
a phase shifter (6) for shifting the phase of the cancellation component of the first electric signal relative to the phase of the second electric signal.

5. A mobile telecommunication terminal according to one of the claims 1 to 4,
**characterised in,**
**that** the first transducer (1) is connected to the second transducer (2) by means of passive components.

6. A mobile telecommunication terminal according to claim 5,
**characterised in,**
**that** a resistor (41) is adapted to form a passive component.

7. A mobile telecommunication terminal according to claim 5 or 6,
**characterised in,**
**that** a capacitor and/or an inductance is/are adapted to form a passive component.

8. A mobile telecommunication terminal according to one of the claims 5 to 7,
**characterised in,**
**that** one contact of the first transducer (1) is connected to ground potential via a resistor (41) being shunt by a switch (51), whereby the switch is in a closed state if no electric signal is supplied to the second transducer (2) and is in an open state otherwise.

9. A mobile telecommunication terminal according to one of the claims 1 to 7,
**characterised in,**
**that** the second transducer (2) is driven by a separate power amplifier stage (7).

10. A mobile telecommunication terminal according to claim 9,
**characterised in,**
**that** the connection from the signal path of the first transducer (1) to the second transducer (2) is branched at the input of the separate power amplifier stage (7).

11. A mobile telecommunication terminal according to claim 9,
**characterised in,**
**that** the connection from the signal path of the first transducer (1) to the second transducer (2) is branched at the output of the separate power amplifier stage (7).

12. A mobile telecommunication terminal according to one of the claims 1 to 4,
**characterised in,**
**that** the first and second transducer are driven by separate outputs (31, 32) of the voice band electronic circuit (4).

13. A mobile communication terminal according to claim 12,
**characterised in,**
**that** at least one of the function units filter (5) and phase shifter (6) is a digital filter.

14. A mobile telecommunication terminal according to claim 12,
**characterised in,**
**that** at least one of the function units filter (5) and phase shifter (6) is adapted to process time discrete analog signals.

15. A mobile telecommunication terminal according to one of the claims 1 to 9,
**characterised in,**
**that** the first and/or second transducer (1,2) is/are of an electrodynamic type.

## Patentansprüche

1. Mobiles Telekommunikatonsterminal (10) umfassend
einen ersten Wandler (1) zum Erzeugen eines akustischen Signals, welches zu einem Hörer (3) des mobilen Telekommunikationsterminals (10) zugeführt wird, basierend auf einem ersten elektrischen Signal, und einen zweiten Wandler zum Erzeugen eines Hochschalldruckakustiksignals basierend auf einem zweiten elektrischen Signal,
**dadurch gekennzeichnet, dass**
eine Auslöschungskomponente des ersten elektrischen Signals, welche an dem ersten Wandler (1) vorgesehen ist, eine Wellenform aufweist, welche geeignet ist, um zumindest teilweise den Teil des Hochschalldruckakustiksignals auszulöschen, welcher durch den zweiten Wandler (2) produziert wird, welcher in den Hörer (3) des mobilen Telekommunikationsterminals (10) hinein streut.

2. Mobiles Telekommunikationsterminal gemäß Anspruch 1, **dadurch gekennzeichnet, dass** die Erzeugung der Auslöschungskomponente des ersten elektrischen Signals und die Erzeugung des zweiten elektrischen Signals auf einem gemeinsamen elektrischen Signal basieren.

3. Mobiles Telekommunikationsterminal gemäß Anspruch 1 oder 2, **gekennzeichnet durch** ein Filter (5) zum Beeinflussen des Spektrums der Auslöschungskomponente des ersten elektrischen Signals.

4. Mobiles Telekommunikationsterminal gemäß Anspruch 1, 2 oder 3, **gekennzeichnet durch** einen Phasenschieber (6) zum Verschieben der Phase der Auslöschungskomponente des ersten elektrischen Signals relativ zu der Phase des zweiten elektrischen Signals.

5. Mobiles Telekommunikationsterminal gemäß einem der Ansprüche 1 bis 4, **dadurch gekennzeichnet, dass** der erste Wandler (1) mit dem zweiten Wandler (2) mittels passiver Komponenten verbunden ist.

6. Mobiles Telekommunikationsterminal gemäß Anspruch 5, **dadurch gekennzeichnet, dass** ein Widerstand (41) angepasst ist, um eine passive Komponente zu bilden.

7. Mobiles Telekommunikationsterminal gemäß Anspruch 5 oder 6, **dadurch gekennzeichnet, dass** ein Kondensator und/oder eine Induktanz angepasst ist/sind, um eine passive Komponente zu bilden.

8. Mobiles Telekommunikationsterminal gemäß einem der Ansprüche 5 bis 7, **dadurch gekennzeichnet, dass** ein Kontakt des ersten Wandlers (1) an Massepotential über einen Widerstand (41) angeschlossen ist, welcher durch einen Schalter (51) parallel geschaltet wird, wobei der Schalter in einem geschlossenen Zustand ist, wenn kein elektrisches Signal dem zweiten Wandler (2) zugeführt wird, und ansonsten in einem offenen Zustand ist.

9. Mobiles Telekommunikationsterminal gemäß einem der Ansprüche 1 bis 7, **dadurch gekennzeichnet, dass** der zweite Wandler (2) durch eine separate Leistungsverstärkerstufe (7) betrieben wird.

10. Mobiles Telekommunikationsterminal gemäß Anspruch 9, **dadurch gekennzeichnet, dass** die Verbindung von dem Signalpfad des ersten Wandlers (1) zu dem zweiten Wandler (2) an dem Eingang der separaten Leistungsverstärkerstufe (7) abgezweigt ist.

11. Mobiles Telekommunikationsterminal gemäß Anspruch 9, **dadurch gekennzeichnet, dass** die Verbindung von dem Signalpfad des ersten Wandlers (1) zu dem zweiten Wandler (2) an dem Ausgang der separaten Leistungsverstärkerstufe (7) abgezweigt ist.

12. Mobiles Telekommunikationsterminal gemäß einem der Ansprüche 1 bis 4, **dadurch gekennzeichnet, dass** der erste und zweite Wandler durch separate Ausgänge (31, 32) der elektronischen Sprachbandschaltung (4) betrieben werden.

13. Mobiles Telekommunikationsterminal gemäß Anspruch 12, **dadurch gekennzeichnet, dass** zumindest eines von dem Funktionseinheitsfilter (5) und Phasenschieber (6) ein digitales Filter ist.

14. Mobiles Telekommunikationsterminal gemäß Anspruch 12, **dadurch gekennzeichnet, dass** zumindest eines von dem Funktionseinheitsfilter (5) und Phasenschieber (6) angepasst ist, um zeitdiskrete analoge Signale zu verarbeiten.

15. Mobiles Telekommunikationsterminal gemäß einem der Ansprüche 1 bis 9, **dadurch gekennzeichnet, dass** der erste und/oder zweite Wandler (1; 2) von einem elektrodynamischen Typ ist/sind.

## Revendications

1. Terminal de télécommunication mobile (10), comprenant un premier transducteur (1) destiné à produire un signal acoustique fourni à l'écouteur (3) du terminal de télécommunication mobile (10), sur la base d'un premier signal électrique, et un second transducteur destiné à produire un signal acoustique à pression acoustique élevée, sur la base d'un second signal électrique,
**caractérisé en ce qu'**une composante d'annulation du premier signal électrique implanté dans le premier transducteur (1) possède une forme d'onde qui convient pour annuler au moins partiellement la partie du signal acoustique à pression acoustique élevée produit par le second transducteur (2) qui déborde dans l'écouteur (3) du terminal de télécommunication mobile (10).

2. Terminal de télécommunication mobile selon la revendication 1, **caractérisé en ce que** la production de la composante d'annulation du premier signal électrique et la production du second signal électrique sont fondées sur un signal électrique commun.

3. Terminal de télécommunication mobile selon la revendication 1 ou 2, **caractérisé par** un filtre (5) destiné à influer sur le spectre de la composante d'annulation du premier signal électrique.

4. Terminal de télécommunication mobile selon la revendication 1, 2 ou 3, **caractérisé par** un déphaseur (6) destiné à décaler la phase de la composante d'annulation du premier signal électrique par rapport à la phase du second signal électrique.

5. Terminal de télécommunication mobile selon l'une des revendications 1 à 4, **caractérisé en ce que** le premier transducteur (1) est connecté au second transducteur (2) à l'aide de composants passifs.

6. Terminal de télécommunication mobile selon la revendication 5, **caractérisé en ce qu'**une résistance (41) est adaptée pour constituer un composant passif.

7. Terminal de télécommunication mobile selon la revendication 5 ou 6, **caractérisé en ce que** qu'un condensateur et/ou une inductance sont adaptées pour constituer un composant passif.

8. Terminal de télécommunication mobile selon l'une des revendications 5 à 7, **caractérisé en ce qu'**un contact du premier transducteur (1) est connecté au potentiel de la masse via une résistance (41) qui est shuntée par un commutateur (51), de telle manière que le commutateur est dans un état fermé lorsque aucun signal électrique n'est fourni au second transducteur (2) et est dans un état ouvert sinon.

9. Terminal de télécommunication mobile selon l'une des revendications 1 à 7, **caractérisé en ce que** le second transducteur (2) est attaqué par un étage amplificateur de puissance (7) distinct.

10. Terminal de télécommunication mobile selon la revendication 9, **caractérisé en ce que** la connexion entre le trajet du signal du premier transducteur (1) et le second transducteur (2) est branchée à l'entrée de l'étage amplificateur de puissance (7) distinct.

11. Terminal de télécommunication mobile selon la revendication 9, **caractérisé en ce que** la connexion entre le trajet du signal du premier transducteur (1) et le second transducteur (2) est branchée à la sortie de l'étage amplificateur de puissance (7) distinct.

12. Terminal de télécommunication mobile selon l'une des revendications 1 à 4, **caractérisé en ce que** le premier et le second transducteur sont attaqués par des sorties distinctes (31, 32) du circuit électronique en bande vocale (4).

13. Terminal de télécommunication mobile selon la revendication 12, **caractérisé en ce qu'**au moins une des unités fonctionnelles que sont le filtre (5) et le déphaseur (6) est un filtre numérique.

14. Terminal de télécommunication mobile selon la revendication 12, **caractérisé en ce qu'**au moins une des unités fonctionnelles que sont le filtre (5) et le déphaseur (6) est adaptée pour traiter des signaux analogiques discrets.

15. Terminal de télécommunication mobile selon l'une des revendications 1 à 9, **caractérisé en ce que** le premier et/ou le second transducteur (1 ; 2) sont du type électrodynamique.
